# EUROPÄISCHE PATENTSCHRIFT

(11) **EP 3 962 628 B1**
(45) Veröffentlichungstag und Bekanntmachung des Hinweises auf die Patenterteilung: **06.05.2026**
(21) Anmeldenummer: 20720081.7
(22) Anmeldetag: 24.04.2020
(51) Int. Cl.: B01D 46/24, B01D 39/20

(54) **DICHTELEMENT**
SEALING ELEMENT
ÉLÉMENT D'ÉTANCHÉITÉ

(30) Priorität: 30.04.2019 EP 19171716
(43) Veröffentlichungstag der Anmeldung: 09.03.2022
(73) Patentinhaber: Bucher Unipektin AG, 8166 Niederweningen (CH)
(72) Erfinder: GANS, Ulrich, 9214 Kradolf (CH); ZUBER, Jürg, 9240 Uzwil (CH); MAYER, Bettina, 8640 Rapperswil (CH); DUSS, Thomas, 8852 Altendorf (CH); BRUHIN, Silvan, 8730 Uznach (CH)
(74) Vertreter: Hepp Wenger Ryffel AG
(86) Internationale Anmeldenummer: PCT/EP2020/061528
(87) Internationale Veröffentlichungsnummer: WO 2020/221672

(56) Entgegenhaltungen:
- DE-A1- 10 322 015
- DE-A1- 10 335 343
- DE-A1- 102011 080 763
- US-A1- 2010 224 549

## Beschreibung

Die vorliegende Erfindung betrifft ein Dichtelement für insbesondere keramische Filterelemente, sowie Filtrationsanlagen mit Lochplatten und derartigen Filterelementen in Kombination mit erfindungsgemässen Dichtelementen.

Filterelemente wie keramische Filterelemente oder Filterelemente aus Kunststoffmaterial sind gebräuchliche Vorrichtungen zur Abtrennung von Komponenten aus Gasen oder Flüssigkeiten. Eine Anzahl von stabförmigen keramischen Filterelementen oder Kunststoff-Filterelementen wird parallel und auch seriell zueinander in einem Gehäusekörper einer Filtrationsanlage angeordnet und mittels Lochplatten fest eingespannt. Die Lochplatten weisen Öffnungen auf, in welche die stabförmigen keramischen Filterelemente oder Kunststoff-Filterelemente eingeführt werden. Der Durchmesser einer solchen Öffnung ist in der Regel etwas grösser als der Durchmesser des einzuführenden Endbereichs des Filterelements. Um das Filterelement auch während des unter Druck erfolgenden Filtriervorgangs dicht in der Öffnung zu befestigen und den Innenraum des einem Gehäusekörpers abzudichten, ist eine O-Ringdichtung vorgesehen, welche auf einem oder mehreren Endbereichen des Filterelements radial oder axial wirkend angeordnet wird und den Zwischenraum zwischen den Wänden der Öffnung und dem Filterelement ausfüllt.

Derartige O-Ring-Dichtelemente sind beispielsweise aus der DE 198 46 041 A1 und der DE 103 22 015 A1 bekannt.

Diese herkömmliche Dichtanordnung weist verschiedene Nachteile auf. So müssen die Dichtungen unter erheblichem Kraftaufwand implementiert werden, indem die O-Ring-Dichtelemente zwischen zwei Platten eingespannt und in eine dichtende Form gepresst werden.

Damit verbunden ist eine Gefahr der Beschädigung oder Schwächung der Endbereiche der Filterelemente.

Auch deshalb müssen im Stand der Technik zum Schutz der Enden der keramischen Filterelemente oder Kunststoff-Filterelemente weitere Anschlagdämpfer bereitgestellt werden, beispielsweise ein zweiter O-Ring. Dies bedeutet zusätzlichen Aufwand und schützt die Keramik-Enden oder Kunststoff-Enden nicht sicher genug.

Die DE 10 2011 030733 A1 offenbart ein Dichtung für ein Filterelement in einem Gehäusekörper einer Filtrationsanlage. Zur Abdichtung des Gehäuses weisen die Filterelemente am unteren und oberen Endbereich eine dichtende Vergussmasse auf, die die Filterelemente umschließt.

Die DE 103 35 343 A1 zeigt ein keramisches Filterelement, das in einem Gehäusekörper eingebaut ist. Das keramische Filterelement ist über Dichtungen in den Gehäusekörper und in den Gehäusedeckel eingefügt.

Es war die Aufgabe der vorliegenden Erfindung, ein Dichtelement für stabförmige keramische Filterelemente oder Kunststoff-Filterelemente bereitzustellen, welches die vorstehend beschriebenen Nachteile aus dem Stand der Technik überwindet.

Die vorstehende Aufgabe wurde durch ein Dichtelement gemäss Anspruch 1 gelöst.

Insbesondere betrifft die vorliegende Erfindung ein Dichtelement für ein Filterelement in einem Gehäusekörper einer Filtrationsanlage, vorzugsweise in einer Cross-Flow-Filtrationsanlage, dadurch gekennzeichnet, dass das Dichtelement einstückig ringförmig ausgebildet ist und einen Abschnitt zur dichtenden Anordnung des Filterelements in der Filtrationsanlage sowie einen Abschnitt zur Anschlagdämpfung für das Filterelement umfasst, wobei der Abschnitt des Dichtelements zur dichtenden Anordnung des Filterelements im Gehäusekörper mindestens einen, vorzugsweise zwei, integrale O-ringförmige Teile umfasst und in einer Hälfte des Dichtelements angeordnet ist, und wobei der Abschnitt zur Anschlagdämpfung einer Endkante des Filterelements einen Abschnitt umfasst, der in das Innere des ringförmigen Dichtelements ragt.

Im Gegensatz zum Stand der Technik vereinigt das erfindungsgemässe Dichtelement in sich sowohl die abdichtende Funktion herkömmlicher O-Ringdichtungen als auch die anschlagdämpfende Funktion herkömmlicher Anschlagdämpfer.

Das erfindungsgemässe Dichtelement ist einstückig aufgebaut und ringförmig. Der Durchmesser des kreisförmigen Ausschnitts in der Ringebene im Innern des Dichtelements ist derart dimensioniert, dass das erfindungsgemässe Dichtelement auf das Ende herkömmlicher Filterelemente für den Einsatz in Cross-Flow-Filtrationsanlagen geschoben werden können und dort in dichtendem Kontakt mit dem Filterelement stehen. Üblicherweise liegt der Durchmesser des kreisförmigen Ausschnitts im Innern des Dichtelements im Bereich von 20 bis 150 mm, vorzugsweise 20 bis 80 mm, bevorzugter 40 bis 65 mm und besonders bevorzugt 40 bis 55 mm.

Das erfindungsgemässe Dichtelement weist erfindungsgemäss bevorzugt in der Ringebene eine Dicke im Bereich von 2 bis 8 mm, bevorzugter 3 bis 6 mm auf.

Das erfindungsgemässe Dichtelement weist erfindungsgemäss bevorzugt eine Höhe vertikal zur Ringebene im Bereich von 10 bis 40 mm, bevorzugter 11 bis 30 mm und besonders bevorzugt 12 bis 20 mm auf.

Das Dichtelement ist aus einem elastischen Material gefertigt, ringförmig und verformt sich, wenn das Filterelement in die entsprechende Öffnung der Lochplatte eingeführt wird. Dies führt zur Ausbildung einer dichtenden Verbindung zwischen Dichtelement und Filterelement. Das elastische Material muss neben der Erfüllung der erforderlichen elastischen Eigenschaften auch über einen Temperaturbereich von mindestens 0°C bis 90°C stabil sein, d.h. sowohl unter Filtrationsbedingungen als auch unter Sterilisationsbedingungen. Derartige Materialien sind dem Fachmann bekannt. Bevorzugt sind hochelastische Gummi-Materialien wie beispielsweise EPDM (Ethylen-Propylen-Dien-Kautschuk), vorzugsweise mit einer Shore A-Härte von 50 bis 90, bevorzugter 60 bis 80.

Das erfindungsgemässe Dichtelement umfasst einen Abschnitt zur dichtenden Anordnung eines Filterelements in einer Lochplatte. Dieser Abschnitt befindet sich an einem Ende der Höhenerstreckung des Dichtelements, vorzugsweise in der unteren Hälfte der Höhenerstreckung des Dichtelements. Unter Höhenerstreckung ist hierbei die Ausdehnung des Dichtelements vertikal zu seiner Ringebene (d.h. seine Höhe) zu verstehen. Unter unterer Hälfte ist hierbei der Teil des Dichtelements zu verstehen, welcher sich im Zustand, in welchem das Dichtelement auf einem Filterelement aufgebracht ist, unten befindet, d.h. vom entsprechenden Ende des Filterelements abgewandt.

In diesem Abschnitt zur dichtenden Anordnung eines Filterelements in einer Lochplatte ist mindestens ein integrales O-ringförmiges Teil angeordnet. Es können aber auch mehr als ein integrales O-ringförmiger Teil, beispielsweise 1 bis 5, O-ringförmige Teile bereitgestellt sein. Erfindungsgemäss bevorzugt sind in diesem Abschnitt zur dichtenden Anordnung eines Filterelements in einer Lochplatte zwei integrale O-ringförmige Teile angeordnet.

Erfindungsgemäss bevorzugt sind der eine oder die mehreren O-ringförmigen Teile im erfindungsgemässen Dichtelement derart ausgestaltet, dass sie in der Ringebene des Dichtelements Ausstülpungen aufweisen, welche sich vom Dichtelement weg nach aussen und/oder nach innen in den kreisförmigen Ausschnitt des Dichtelements erstrecken. Während die sich nach aussen erstreckenden Ausstülpungen der O-ringförmigen Teile die vorstehend beschriebene dichtende Funktion haben, kann mit den sich nach innen erstreckenden Ausstülpungen der O-ringförmigen Teile insbesondere in Kombination mit einem entsprechenden Schliff am Filterelement eine rutschfeste Positionierung des Dichtelements auf dem Filterelement sowie eine dichtende Funktion zwischen Dichtelement und Filterelement erreicht werden. Erfindungsgemäss bevorzugt sind der eine oder die mehreren O-ringförmigen Teile im erfindungsgemässen Dichtelement derart ausgestaltet, dass sie in der Ringebene des Dichtelements Ausstülpungen aufweisen, welche sich vom Dichtelement weg nach aussen und nach innen in den kreisförmigen Ausschnitt des Dichtelements erstrecken.

Erfindungsgemäss bevorzugt ist die Dicke des Dichtelements im Bereich der O-ringförmigen Teile um einen Wert im Bereich von 3 bis 7 mm, bevorzugter 4 bis 6 mm und besonders bevorzugt 4.5 bis 5.5 mm erweitert. Sind im entsprechenden Abschnitt des Dichtelements mehrere integrale O-ringförmige Teile bereitgestellt, können diese entweder dieselbe Dicke oder voneinander unterschiedliche Dicken aufweisen, wobei die unterschiedlichen Dicken im vorstehend angegebenen Bereich liegen. Diese Werte beziehen sich auf das gesamte Dichtelement in einer Ebene durch den O-ringförmigen Teil, vertikal zur Höhe des Dichtelements.

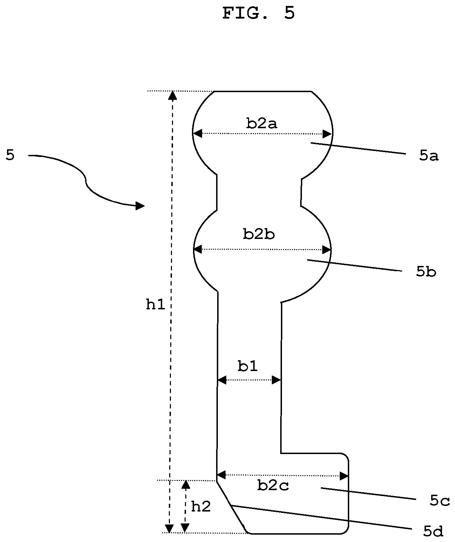

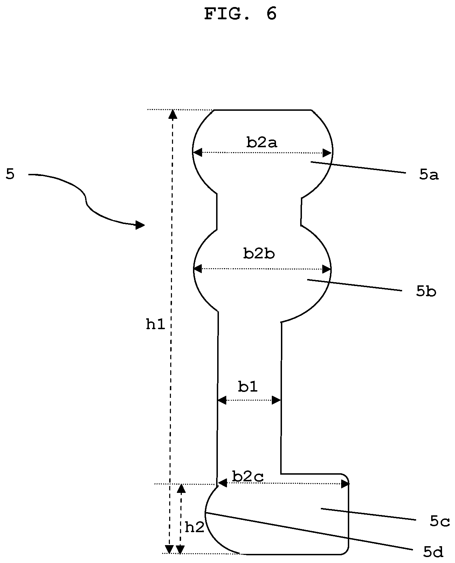

Erfindungsgemäss bevorzugt weist das Dichtelement im Querschnitt (d.h. nicht wie vorstehend bezogen auf das gesamte Dichtelement) ein Verhältnis einer Dicke im Bereich der O-ringförmigen Teile (in Fig. 5 und 6 als b2a/b2b bezeichnet) zu einer Dicke in einem Bereich zwischen den funktionalen Abschnitten (in Fig. 5 als b1 bezeichnet) auf, welches im Bereich von 1,3:1 bis 4:1, vorzugsweise 1,5:1 bis 3,5:1 liegt.

Weist ein O-ringförmiger Teil Ausstülpungen auf, welche sich vom Dichtelement weg nach aussen und nach innen in den kreisförmigen Ausschnitt des Dichtelements erstrecken, so können diese Ausstülpungen um den gleichen Wert aus der Dicke des Dichtelements herausragen oder diesbezüglich um einen Wert im Bereich von 0,01 bis 0,5 mm, vorzugsweise 0,05 bis 0,3 mm voneinander abweichen.

Das erfindungsgemässe Dichtelement umfasst weiterhin einen integralen Abschnitt zur Anschlagdämpfung. Der Abschnitt zur Anschlagdämpfung befindet sich am vom Abschnitt zur dichtenden Anordnung abgewandten Ende des Dichtelements, vorzugsweise in der oberen Hälfte der Höhenerstreckung des Dichtelements. Unter oberer Hälfte ist hierbei der Teil des Dichtelements zu verstehen, welcher sich im Zustand, in welchem das Dichtelement auf einem Filterelement aufgebracht ist, oben befindet, d.h. beim entsprechenden Ende des Filterelements und dieses schützend.

Der Abschnitt des Dichtelements zur Anschlagdämpfung ist derart ausgestaltet, dass er am entsprechenden Ende des Dichtelements L-förmig bereitgestellt ist. Der längere Teil des Abschnitts zur Anschlagdämpfung liegt dabei im Höhenerstreckungsbereich des Dichtelements, während der kürzere Teil des Abschnitts zur Anschlagdämpfung in den Bereich des kreisförmigen Ausschnitts im Inneren des Dichtelements ragt.

Anders ausgedrückt befindet sich gemäss der vorliegenden Erfindung zwischen dem Abschnitt zur dichtenden Anordnung und einem sich in das Innere des Dichtelements erstreckenden Ende des Dichtelements ein zylinderförmiger Abschnitt. Wird das Dichtelement auf das Ende eines Filterelements angebracht, umschliesst der Abschnitt des Dichtelements zur Anschlagdämpfung somit das entsprechende Ende des Filterelements und schützt dieses vor Beschädigung.

Im Bereich des kürzeren Teils des L-förmigen Abschnitts zur Anschlagdämpfung ist die Dicke des Dichtelements im Querschnitt (in Fig. 5 und 6 als b2c bezeichnet) in das Innere des Dichtelements hinein vorzugsweise um 2 bis 10 mm, bevorzugter um 3 bis 6 mm erweitert.

Erfindungsgemäss bevorzugt weist das Dichtelement im Querschnitt ein Verhältnis einer Dicke im Bereich des kürzeren Teils des L-förmigen Abschnitts zur Anschlagdämpfung (in Fig. 5 und 6 als b2c bezeichnet) zu einer Dicke in einem Bereich zwischen den funktionalen Abschnitten (in Fig. 5 als b1 bezeichnet) auf, welches im Bereich von 1,25:1 bis 6:1, vorzugsweise 1,6:1 bis 4:1 liegt.

Der kürzere Teil des L-förmigen Abschnitts zur Anschlagdämpfung weist vorzugsweise eine Höhe (in Fig. 5 und 6 als h2 bezeichnet) von 1 bis 5 mm, bevorzugter von 2 bis 4 mm auf.

Erfindungsgemäss bevorzugt weist das Dichtelement ein Verhältnis einer Höhe vertikal zur Ringebene (in Fig. 5 und 6 als h1 bezeichnet) zu einer Höhe des kürzeren Teils des L-förmigen Abschnitts zur Anschlagdämpfung (in Fig. 5 und 6 als h2 bezeichnet) auf, welches im Bereich von 2:1 bis 40:1, vorzugsweise 2,5:1 bis 20:1, besonders bevorzugt 3:1 bis 10:1 liegt.

Gemäss einer besonders bevorzugten Ausführungsform der vorliegenden Erfindung kann der Abschnitt des Dichtelements zur Anschlagdämpfung auf seiner Aussenseite, d.h. das entsprechende Ende des Dichtelements auf der vom inneren kreisförmigen Ausschnitt abgewandten Seite, abgeschrägt sein. Dies erleichtert das Einbringen eines mit dem erfindungsgemässen Dichtelement versehenen Filterelements in eine Lochplatte einer Filtriervorrichtung. Vorzugsweise ist die Abschrägung über eine Höhe des Dichtelements von 0,5 bis 4mm, bevorzugter 1 bis 3 mm, und mit einem Winkel relativ zur Höhe des Dichtelements von vorzugsweise 10° bis 45°, bevorzugter 15° bis 40°, ausgebildet.

Mit anderen Worten geht bei dieser bevorzugten Ausführungsform ein stirnseitiges Ende des Dichtelements über eine schräge Aussenfläche in einen zylinderförmigen Abschnitt des Dichtelements über.

Gemäss einer weiteren besonders bevorzugten Ausführungsform der vorliegenden Erfindung kann der Abschnitt des Dichtelements zur Anschlagdämpfung auf seiner Aussenseite, d.h. das entsprechende Ende des Dichtelements auf der vom inneren kreisförmigen Ausschnitt abgewandten Seite, eine Ausstülpung analog zu den Ausstülpungen der O-ringförmigen Abschnitte aufweisen. Vorzugsweise ist die Ausstülpung über eine Höhe des Dichtelements (in Fig. 6 als h2 bezeichnet) von 0,5 bis 4 mm, bevorzugter 2 bis 3,5 mm ausgebildet und erstreckt sich im Querschnitt vom Dichtelement weg nach aussen um einen Wert von 0,5 bis 3 mm, vorzugsweise 1 bis 2,5 mm und besonders bevorzugt 1,2 bis 2 mm.

Die gemäss der vorliegenden Erfindung bevorzugt zu verwendenden stabförmigen keramischen Filterelemente sind an sich bekannt und müssen hier nicht näher erläutert werden. Gemäss der vorliegenden Erfindung bevorzugt sind Filterelemente, welche nach dem Cross-Flow-Prinzip betrieben werden. Hierbei fliesst das Unfiltrat (d.h. nicht filtrierte Flüssigkeit) durch kanalförmige Bohrungen des Filterelements, während das Filtrat quer zur Strömungsrichtung des Unfiltrats durch das poröse Material des Filterelements in den Innenraum der Filtrationsanlage hineinströmt und von dort aus abgeleitet wird.

Gängige keramische Filterelemente haben Durchmesser von 20 bis 65 mm, beispielsweise 25 mm, 42 mm oder 52 mm und umfassen eine oder mehrere kanalförmige Bohrungen. Die keramischen Filterelemente umfassen beispielsweise einen Grundkörper und eine Membran (filtrierende Schicht). Die Porengrösse des Grundkörpers liegt in einem Bereich von beispielsweise 5 bis 50 µm, vorzugsweise 10 bis 30 µm, besonders bevorzugt 20 µm. Die Membrane (filtrierende Schicht) auf den Innenwänden der Kanäle umfasst eine oder mehrere Schichten und besitzt eine Dicke von 0,5 bis 10 µm. Die Porengrösse der Membrane liegt je nach Anwendung in einem Bereich von 0,01 bis 1,4 µm. Vorzugsweise werden die Filterelemente mit einer Durchflussgeschwindigkeit von 1-5 m/s, vorzugsweise 3-5 m/s betrieben.

Gemäss einer besonders bevorzugten Ausführungsform der vorliegenden Erfindung sind die Filterelemente an einem oder beiden Enden mit einem Schliff versehen, welcher in das Innere des Dichtelements gerichtete Ausstülpungen im Abschnitt des Dichtelements zur dichtenden Anordnung aufnehmen kann.

Vorzugsweise weist der Schliff eine Höhe axial zur Stabachse des Filterelements im Bereich von 5 bis 20 mm, bevorzugter 5 bis 15 mm und besonders bevorzugt 6 bis 10 mm auf.

Weiterhin vorzugsweise weist der Schliff eine Tiefe im Bereich von 0,1 bis 7 mm, bevorzugter 1 bis 6 mm und besonders bevorzugt 2.5 bis 5 mm auf. Die Tiefe des Schliffs kann entlang des Umfangs variieren, da der Durchmesser der ungeschliffenen Filterelemente nicht konstant ist. Mit anderen Worten ist der Radius des Filterelements beim Schliff um den vorstehend genannten Wert vermindert.

Gemäss der vorliegenden Erfindung können auch stabförmige nichtkeramische Filterelemente verwendet werden. Vorzugsweise handelt es sich hierbei um Kunststoff-Filterelemente, d.h. um Filterelemente, welche aus einem synthetischen Polymermaterial gefertigt sind. Als Kunststoffmaterial kann jedes synthetische Polymermaterial eingesetzt werden, welches die für den bestimmungsgemässen Gebrauch erforderlichen Materialeigenschaften bereitstellt. Beispielsweise kann das Kunststoff-Filterelement aus Membranröhrchen aus Polyethersulfon und einer Gitterumhüllung (Gitterrohr) aus Polypropylen bestehen.

Gemäss der vorliegenden Erfindung bevorzugt sind Filterelemente, welche nach dem Cross-Flow-Prinzip betrieben werden. Hierbei fliesst das Unfiltrat (d.h. nicht filtrierte Flüssigkeit) durch die Membranröhrchen des Filterelements, während das Filtrat quer zur Strömungsrichtung des Unfiltrats durch das poröse Material des Filterelements in den Innenraum der Filtrationsanlage hineinströmt und von dort aus abgeleitet wird.

Die erfindungsgemäss einsetzbaren Kunststoff-Filterelemente haben Durchmesser von 20 bis 150 mm, beispielsweise 25 mm, 42 mm, 52, 60 oder 150 mm, und umfassen ein oder mehrere Membranröhrchen, beispielsweise 1 bis 300, vorzugsweise 10 bis 280 Membranröhrchen. Diese Membranröhrchen aus beispielsweise Polyethersulfon werden an ihren beiden Enden durch eine Vergussmasse, das sogenannte Potting, miteinander zu einem Bündel verbunden. Ein dieses Membranbündel umhüllendes Gitterrohr aus beispielsweise Polypropylen wird ebenfalls von dem Potting eingeschlossen. So entsteht ein mechanisch stabiler Zylinder, welcher durch Anfügen entsprechender Endstücke zu einer Filterkartusche komplettiert wird. Die Endstücke sind so gefertigt, dass sie die erfindungsgemässen Dichtungen aufnehmen können.

Die Membranröhrchen werden so gefertigt, dass die Wandung eine innere Struktur erhält, die geeignet ist einerseits Trubstoffe ausreichend gut abzutrennen und andererseits einen möglichst hohen Filtratfluss erlaubt. Die Porengrösse dieser Wandung (= die Membran) liegt in einem Bereich von beispielsweise 10 bis 1000 nm, vorzugsweise 100 bis 600 nm.

Vorzugsweise werden die Filterelemente mit einer Durchflussgeschwindigkeit von 0,5-5 m/s, vorzugsweise 1-4 m/s betrieben.

Gemäss einer besonders bevorzugten Ausführungsform der vorliegenden Erfindung erhalten die Kunststoff-Filterelemente an einem oder beiden Enden ein mit einem Schliff versehenes Endstück, welches in das Innere des Dichtelements gerichtete Ausstülpungen im Abschnitt des Dichtelements zur dichtenden Anordnung aufnehmen kann. Es wird für diese Ausführungsform der Begriff "Schliff" verwendet, auch wenn bei einem Kunststoff-Filterelement der entsprechende Abschnitt auf andere Art als durch Schleifen erzeugt werden kann.

Vorzugsweise weist der Schliff eine Höhe axial zur Stabachse des Filterelements im Bereich von 5 bis 20 mm, bevorzugter 5 bis 15 mm und besonders bevorzugt 6 bis 10 mm auf.

Weiterhin vorzugsweise weist der Schliff eine Tiefe im Bereich von 0,1 bis 7 mm, bevorzugter 1 bis 6 mm und besonders bevorzugt 1.5 bis 5 mm auf. Mit anderen Worten ist der Radius des Filterelements beim Schliff um den vorstehend genannten Wert vermindert.

Gemäss einer bevorzugten Ausführungsform umfasst das erfindungsgemässe Kunststoff-Filterelement mindestens ein Endstück, vorzugsweise zwei Endstücke. Das Endstück ist mit einem Membranröhrchen oder Membranbündel verbunden, beispielsweise durch eine Schicht aus gehärtetem Epoxidharz. Vorzugsweise sind beide Enden des Membranröhrchens oder Membranbündels mit je einem Endstück wie vorstehend beschrieben verbunden, wobei diese Endstücke besonders bevorzugt die gleichen Dimensionen aufweisen.

Das mindestens eine Endstück des erfindungsgemässen Kunststoff-Filterelements ist vorzugsweise zumindest über einen Abschnitt derart geformt, dass sein Durchmesser über seine Höhe variiert. Dies kann vorzugsweise dadurch realisiert werden, dass das mindestens eine Endstück des erfindungsgemässen Kunststoff-Filterelements zumindest über einen Abschnitt konisch geformt ist. Vorzugsweise weist das Endstück an dem mit einem Membranröhrchen oder Membranbündel verbundenen Ende einen grösseren Durchmesser auf als an dem in einer Lochplatte anzuordnenden, vorzugsweise mit einem Schliff versehenen Ende. Beispielsweise kann der Durchmesser an den Enden des Endstücks voneinander um 5 bis 20 mm, vorzugsweise 7 bis 15 mmm variieren. Gemäss einer bevorzugten Ausführungsform der vorliegenden Erfindung weist das Endstück an dem mit dem Membranröhrchen oder Membranbündel verbundenen Ende einen Durchmesser im Bereich von 20 bis 150 mm, vorzugsweise 20 bis 80 mm, bevorzugter 40 bis 65 mm und besonders bevorzugt 40 bis 55 mm auf.

Das mindestens eine Endstück des erfindungsgemässen Kunststoff-Filterelements weist vorzugsweise eine Höhe von 50 bis 150 mm, bevorzugt von 70 bis 100 mm auf.

Das Membranröhrchen oder Membranbündel des erfindungsgemässen Kunststoff-Filterelements weist vorzugsweise eine Höhe von 700 bis 1500 mm, bevorzugt von 800 bis 1200 mm auf. Ein Membranröhrchen weist zudem vorzugsweise einen Innendurchmesser von 0,5 bis 3 mm, bevorzugter von 1 bis 2,5 mm auf. Das Membranröhrchen oder Membranbündel weist zudem vorzugsweise einen Aussendurchmesser im Bereich von 20 bis 150 mm, vorzugsweise 20 bis 80 mm, bevorzugter 40 bis 65 mm und besonders bevorzugt 40 bis 55 mm auf.

Weist ein Filterelement an beiden Enden einen vorstehend beschriebenen Schliff auf, können diese Schliffe die gleiche Dimension haben oder in den vorstehend genannten Bereichen voneinander variieren.

Die stabförmigen keramischen Filterelemente beziehungsweise Kunststoff-Filterelemente werden auf bekannte Art in einem Gehäusekörper einer Filtrationsanlage parallel zueinander angeordnet. Vorzugsweise und abhängig vom Durchmesser der Filterelemente sind in einem derartigen Gehäusekörper etwa 6 bis 130 Filterelemente vorhanden, wobei aber je nach Anlagengrösse auch Ausgestaltungen mit 1 bis 200 Filterelementen, im Fall von Kunststoff-Filterelementen bis zu 300 Filterelementen, zur Anwendung kommen. Beispielsweise werden bei einem Gehäusekörper einer Filtrationsanlage mit einem Durchmesser von 450 mm, bei einem Durchmesser des Filterelements von 42 mm, 52 Filterelemente und, bei einem Durchmesser des Filterelements von 52 mm, 36 Filterelemente in dem Gehäusekörper angeordnet. Eine Filtrationsanlage kann einen oder mehrere Gehäusekörper enthalten.

Gemäss einer bevorzugten Ausführungsform der vorliegenden Erfindung weisen die Filterelemente an der zur Einführung in eine Lochplatte vorgesehenen Seite abgeschrägte Kanten auf, vorzugsweise um 30 bis 60°, insbesondere bevorzugt um 40-50° abgeschrägte Kanten.

Die keramischen Filterelemente beziehungsweise die Kunststoff-Filterelemente werden zwischen zwei Lochplatten eingespannt, welche als Deckenplatte und Bodenplatte des Gehäusekörpers der Filtrationsanlage fungieren. Die Lochplatten schliessen den Innenraum des Gehäusekörpers der Filtrationsanlage nach oben und unten hin ab.

Die Lochplatten sind an sich bekannt. Sie weisen eine der Anzahl an Öffnungen auf, welche der Anzahl an im Gehäusekörper der Filtrationsanlage befindlichen keramischen Filterelementen oder Kunststoff-Filterelementen entspricht. Gemäss einer bevorzugten Ausführungsform unterschreiten, wie vorstehend ausgeführt, die Durchmesser dieser Öffnungen die Durchmesser der in die Öffnungen einzuführenden keramischen Filterelemente mitsamt aufgebrachten Dichtelementen um einen geringfügigen Betrag, sodass ein Filterelement mitsamt aufgebrachtem Dichtelement unter Verformung des Dichtelements in die entsprechende Öffnung geschoben und dort dichtend angeordnet werden kann. Vorzugsweise liegen die Durchmesser der Öffnungen in einem Bereich zwischen der Dicke des erfindungsgemässen Dichtelements und der durch Ausstülpungen im dichtenden Abschnitt des Dichtelements vergrösserten Dicke des Dichtelements, so dass durch das Einbringen des Filterelement mitsamt aufgebrachtem Dichtelement in die entsprechende Öffnung der dichtende Abschnitt des Dichtelements etwas komprimiert wird.

Das Filterelement mitsamt aufgebrachtem Dichtelement kann auf einfache Weise in die Öffnung der Lochplatte eingeführt und ebenso einfach aus dieser wieder entfernt werden. Somit ist ein einfacher Austausch dieses Bauteils sichergestellt. Das Filterelement ist zwar mit Hilfe des erfindungsgemässen Dichtelements abgedichtet, aber mit diesem nicht derart fest verbunden, dass ein Herausnehmen des Filterelements aus der Öffnung der Lochplatte einen erheblichen Kraftaufwand erforderlich machen würde. Vielmehr kann das Filterelement erfindungsgemäss sehr einfach und ohne sonderlichen Kraftaufwand in die Öffnung eingeführt und aus dieser wieder entnommen werden. Ein Risiko einer Beschädigung des Filterelements ist somit minimiert. Gleichzeitig ist das Filterelement in der Öffnung der Lochplatte sicher positioniert und vor Beschädigung durch Druckausschläge aufgrund der guten Anschlagdämpfung des erfindungsgemässen Dichtelements geschützt.

Aufgrund der Ausgestaltung des erfindungsgemässen Dichtelements ist es zur dichtenden Anordnung nicht erforderlich, das Dichtelement zwischen zwei Lochplatten einzuspannen. Das Filterelement mitsamt aufgebrachtem Dichtelement kann auf einfache Weise in eine Öffnung einer Lochplatte eingeführt und dort fest angeordnet werden. Dadurch kann erfindungsgemäss die Zahl der in einem Gehäusekörper bereitzustellenden Lochplatten um die Hälfte verringert werden (2 statt 4 Lochplatten). Zudem können erfindungsgemäss die einzusetzenden Lochplatten dünner sein als in herkömmlichen Anlagen, vorzugsweise um 5 bis 30%, besonders bevorzugt um 10 bis 20% dünner als herkömmlich eingesetzte Lochplatten.

Weiterhin können sämtliche Bauteile aufgrund der einfachen Demontierbarkeit und Zugänglichkeit gut gereinigt werden.

Filtrationsanlagen zur Trennung von Stoffen aus Flüssigkeiten oder Gasen sind an sich bekannt. Die erfindungsgemässe Filtrationsanlage zeichnet sich durch das innovative Dichtungselement aus, welches vorstehend beschrieben wurde. Erfindungsgemäss bevorzugt handelt es sich um eine Cross-Flow-Filtrationsanlage. Cross-Flow-Filtrationsanlagen sind ebenfalls an sich bekannt.

Die erfindungsgemässe Filtrationsanlage ist insbesondere zur Filtration von alkoholischen und nicht-alkoholischen Getränken, besonders bevorzugt von Bier oder Fruchtsäften oder Fruchtweinen geeignet.

Mit Hilfe der vorliegenden Erfindung ist es auch auf einfache Weise möglich, bestehende Filtrationsanlagen umzurüsten. Hierzu werden herkömmliche Dichtelemente (O-Ringdichtungen und Anschlagdämpfer) durch das erfindungsgemässe Dichtelement ersetzt, und vorzugsweise wird die Zahl der Lochplatten um die Hälfte reduziert und besonders bevorzugt die vorstehend beschriebenen dünneren Lochplatten eingesetzt. Gemäss einer bevorzugten Ausführungsform können auch die in der existierenden Filtrationsanlage eingesetzten herkömmlichen Filterelemente durch erfindungsgemäss bevorzugte, vorstehend beschriebene Filterelemente mit Schliff ersetzt werden.

Die vorliegende Erfindung wird nachstehend anhand von nicht einschränkenden Zeichnungen näher erläutert. Es zeigen:
- Fig. 1: eine schematische Querschnittsansicht einer Ausführungsform eines erfindungsgemässen Gehäusekörpers einer Filtrationsanlage
- Fig. 2: eine Draufsicht auf eine Ausführungsform einer erfindungsgemässe Lochplatte
- Fig. 3: eine dreidimensionale Ansicht einer Ausführungsform des erfindungsgemässen Dichtelements
- Fig. 4: eine Draufsicht einer Ausführungsform des erfindungsgemässen Dichtelements
- Fig. 5: eine Schnittansicht einer Ausführungsform des erfindungsgemässen Dichtelements durch die Achse A-A in Fig. 4
- Fig. 6: eine Schnittansicht einer weiteren Ausführungsform des erfindungsgemässen Dichtelements durch die Achse A-A in Fig. 4
- Fig. 7: eine Ansicht einer Ausführungsform eines erfindungsgemäss bevorzugten Filterelements
- Fig. 8: eine Ansicht einer Ausführungsform eines erfindungsgemäss bevorzugten Kunststoff-Filterelements

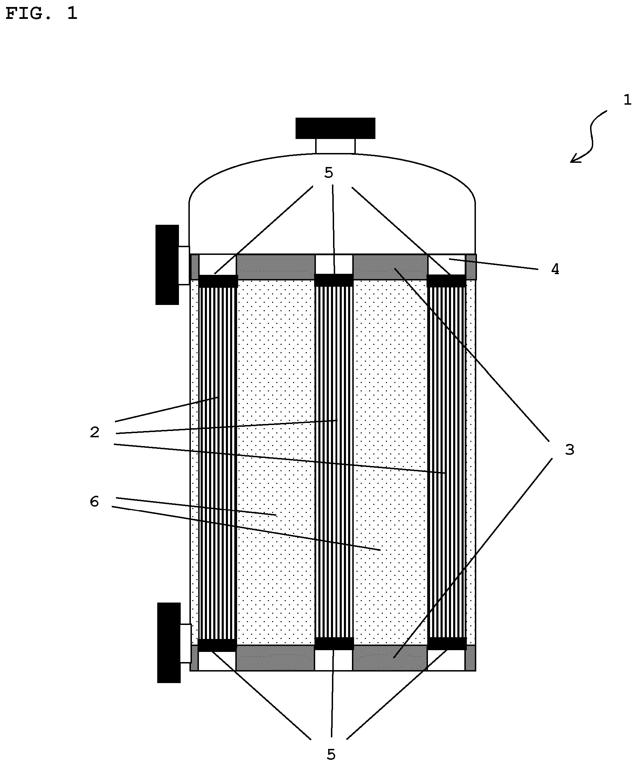

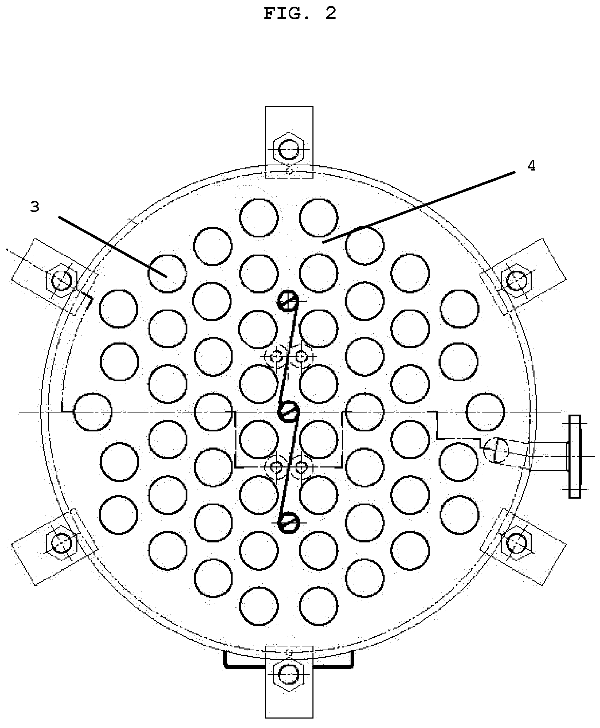

In Fig. 1 ist eine schematische Querschnittsansicht einer Ausführungsform eines erfindungsgemässen Gehäusekörpers 1 einer Filtrationsanlage gezeigt. Mehrere stabförmige keramische Filterelemente oder Kunststoff-Filterelemente 2 mit kanalförmigen Bohrungen (aus Gründen der Einfachheit sind hier nur 3 Elemente gezeigt; in Realität umfasst der Gehäusekörper 6 bis 130 derartiger Filterelemente) sind zwischen zwei Lochplatten 3 eingespannt. Wie in Fig. 2 gezeigt umfassen diese Lochplatten 3 eine Anzahl von Öffnungen 4 entsprechend der Anzahl an vorhandenen Filterelementen 2. In diese Öffnungen 4 sind die Filterelemente 2 mitsamt aufgebrachten Dichtelementen 5 eingeführt und sicher angeordnet. Das Unfiltrat fliesst durch die Kanäle der Filterelemente 2 und wird durch Strömen des Filtrats quer zur Strömungsrichtung des Unfiltrats durch das poröse Material des Filterelements 2 in den Innenraum 6 des Gehäusekörpers 1 der Filtrationsanlage hinein filtriert. Das Filtrat tritt am äusseren Umfang der Filterelemente 2 aus und wird in den Innenraum 6 des Gehäusekörpers 1 der Filtrationsanlage gesammelt und von dort herausbefördert.

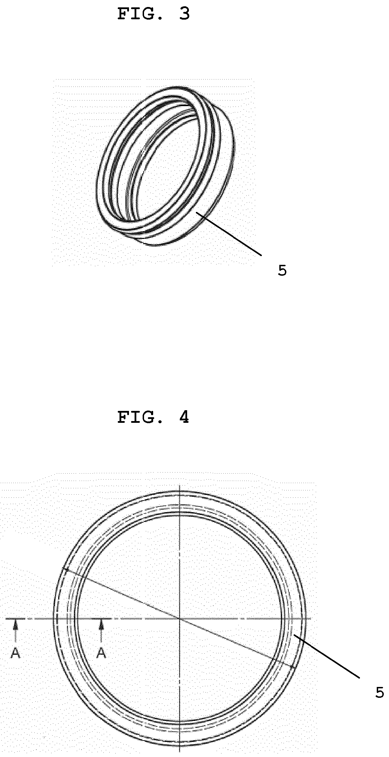

In Fig. 3 ist eine dreidimensionale Ansicht einer Ausführungsform des erfindungsgemässen Dichtelements 5 gezeigt. Das Dichtelement 5 ist ringförmig mit einem kreisförmigen Ausschnitt im Zentrum. In der oberen Hälfte des Dichtelements 5 sind O-Ringförmige Teile zur Abdichtung zu erkennen, welche nachstehend in Fig. 5 näher erläutert werden. In der unteren Hälfte des Dichtelements 5 ist der integrale Anschlagdämpfungsabschnitt zu erkennen, der ebenfalls nachstehend in Fig. 5 näher erläutert wird.

In Fig. 4 ist eine Draufsicht einer Ausführungsform des erfindungsgemässen Dichtelements 5 gezeigt. Das Dichtelement 5 ist ringförmig mit einem kreisförmigen Ausschnitt im Zentrum, welcher einen Durchmesser im Bereich von 20 bis 80 mm, vorzugsweise 40 bis 65 mm und besonders bevorzugt 40 bis 55 m aufweist.

In Fig. 5 ist eine Schnittansicht einer Ausführungsform des erfindungsgemässen Dichtelements durch die Achse A-A in Fig. 4 gezeigt.

Das Dichtelement 5 weist eine Höhe h1 auf, welche im Bereich von 10 bis 40 mm, bevorzugter 11 bis 30 mm und besonders bevorzugt 12 bis 20 mm liegt. Das Dichtelement 5 weist im Querschnitt eine Dicke b1 parallel zur Ringebene auf, welche vorzugsweise im Bereich von 2 bis 8 mm, bevorzugter 2,2 bis 6 mm und besonders bevorzugt 3 bis 6 mm liegt.

In der einen Hälfte (hier oben dargestellt, aber in dem auf einem Filterelement 2 angeordneten Zustand unten befindlich) sind zwei integrale O-Ringförmige Teile 5a, 5b bereitgestellt. Diese O-Ringförmige Teile 5a, 5b sind als Ausstülpungen ausgestaltet und dienen aufgrund ihrer sich nach aussen erstreckenden Ausstülpungen zur dichtenden Anordnung eines mit diesem Dichtelement 5 versehenen Filterelements 2 in einer Öffnung 3 einer Lochplatte 4, während die sich nach innen erstreckenden Ausstülpungen zur rutschfesten Anordnung des Dichtelements 5 auf einem Filterelement 2 sowie zur Abdichtung zwischen Filterelement und Dichtelement dienen. Die O-Ringförmige Teile 5a, 5b haben Dicken b2a und b2b parallel zur Ringebene, welche jeweils grösser sind als die Dicke b1 des Dichtelements 5. Die Dicken b2a und b2b können gleich oder voneinander verschieden sein. Erfindungsgemäss bevorzugt sind im Querschnitt die Dicken b2a und b2b gegenüber der Dicke b1 des Dichtelements 5 um einen Wert im Bereich von 2 bis 7 mm, bevorzugter 2,2 bis 6 mm und besonders bevorzugt 2.5 bis 5.5 mm erweitert.

An einem Ende des Dichtelements 5 (hier unten dargestellt, aber in dem auf einem Filterelement 2 angeordneten Zustand oben befindlich) hat das Dichtelement 5 eine L-Form und weist einen integralen Abschnitt 5c auf. Der Abschnitt 5c dient als Anschlagdämpfung, indem er im angeordneten Zustand über eine Kante eines Filterelements 2 ragt und dieses schützt.

Im Bereich des Abschnitts 5c weist das Dichtelement 5 eine Dicke b2c auf, welche gegenüber der Dicke b1 des Dichtelements 5 in das Innere des Dichtelements 5 hinein vorzugsweise um 2 bis 10 mm, bevorzugter um 3 bis 6 mm erweitert ist.

In der Ausführungsform gemäss Fig. 5 weist das Dichtelement 5 in diesem Abschnitt auf seiner Aussenseite, d.h. das entsprechende Ende des Dichtelements auf der vom inneren kreisförmigen Ausschnitt abgewandten Seite, eine Abschrägung 5d auf. Die Abschrägung 5d erleichtert das Einbringen eines mit dem erfindungsgemässen Dichtelement 5 versehenen Filterelements 2 in eine Öffnung 3 einer Lochplatte 4 eines Gehäusekörpers einer Filtriervorrichtung. Vorzugsweise ist die Abschrägung 5d über eine Höhe h2 des Dichtelements 5von 0,5 bis 4mm, bevorzugter 1 bis 3 mm, und mit einer Schräge von vorzugsweise 10° bis 45°, bevorzugter 15° bis 40°, ausgebildet.

In Fig. 6 ist eine Schnittansicht einer weiteren Ausführungsform des erfindungsgemässen Dichtelements durch die Achse A-A in Fig. 4 gezeigt.

Das Dichtelement 5 weist eine Höhe h1 auf, welche im Bereich von 10 bis 40 mm, bevorzugter 11 bis 30 mm und besonders bevorzugt 12 bis 20 mm liegt. Das Dichtelement 5 weist eine Dicke b1 parallel zur Ringebene auf, welche vorzugsweise im Bereich von 2 bis 8 mm, bevorzugter 2,5 bis 6 mm liegt.

In der einen Hälfte (hier oben dargestellt, aber in dem auf einem Filterelement 2 angeordneten Zustand unten befindlich) sind zwei integrale O-Ringförmige Teile 5a, 5b bereitgestellt. Diese O-Ringförmige Teile 5a, 5b sind als Ausstülpungen ausgestaltet und dienen aufgrund ihrer sich nach aussen erstreckenden Ausstülpungen zur dichtenden Anordnung eines mit diesem Dichtelement 5 versehenen Filterelements 2 in einer Öffnung 3 einer Lochplatte 4, während die sich nach innen erstreckenden Ausstülpungen zur rutschfesten Anordnung des Dichtelements 5 auf einem Filterelement 2 sowie zur Abdichtung zwischen Filterelement und Dichtelement dienen. Die O-Ringförmige Teile 5a, 5b haben Dicken b2a und b2b parallel zur Ringebene, welche jeweils grösser sind als die Dicke b1 des Dichtelements 5. Die Dicken b2a und b2b können gleich oder voneinander verschieden sein. Erfindungsgemäss bevorzugt sind die Dicken b2a und b2b im Querschnitt gegenüber der Dicke b1 des Dichtelements 5 um einen Wert im Bereich von 1,5 bis 7 mm, bevorzugter 2 bis 6 mm und besonders bevorzugt 2.5 bis 5 mm erweitert.

An einem Ende des Dichtelements 5 (hier unten dargestellt, aber in dem auf einem Filterelement 2 angeordneten Zustand oben befindlich) hat das Dichtelement 5 eine L-Form und weist einen integralen Abschnitt 5c auf. Der Abschnitt 5c dient als Anschlagdämpfung, indem er im angeordneten Zustand über eine Kante eines Filterelements 2 ragt und dieses schützt.

Im Bereich des Abschnitts 5c weist das Dichtelement 5 eine Dicke b2c auf, welche im Querschnitt gegenüber der Dicke b1 des Dichtelements 5 in das Innere des Dichtelements 5 hinein vorzugsweise um 2 bis 10 mm, bevorzugter um 3 bis 6 mm erweitert ist.

In der Ausführungsform gemäss Fig. 5 weist das Dichtelement 5 in diesem Abschnitt auf seiner Aussenseite, d.h. das entsprechende Ende des Dichtelements auf der vom inneren kreisförmigen Ausschnitt abgewandten Seite, eine Ausstülpung 5d auf. Vorzugsweise ist die Ausstülpung 5d über eine Höhe h2 des Dichtelements 5 von 0,5 bis 4 mm, bevorzugter 2 bis 3,5 mm ausgebildet und erstreckt sich im Querschnitt vom Dichtelement weg nach aussen um einen Wert von 0,5 bis 3 mm, vorzugsweise 1 bis 2,5 mm und besonders bevorzugt 1,2 bis 2 mm.

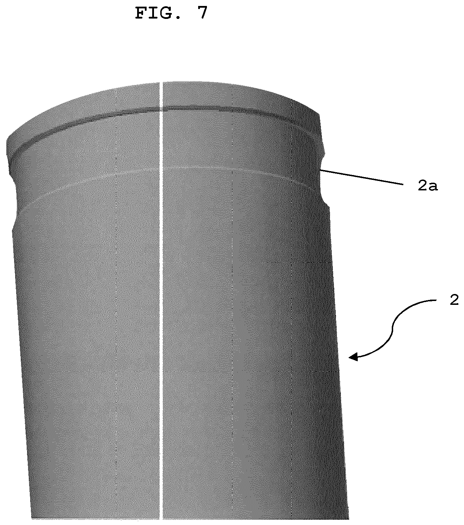

In Fig. 7 ist eine Ansicht einer Ausführungsform eines erfindungsgemäss bevorzugten Filterelements 2 gezeigt. Das Filterelement 2 gemäss dieser Ausführungsform zeichnet sich durch einen Schliff 2a aus, welcher die Ausstülpungen 5a, 5b im Abschnitt des Dichtelements 5 zur dichtenden Anordnung aufnehmen kann. Dadurch kann das Dichtelement 5 rutschfest auf dem Filterelement 2 angeordnet werden.

Vorzugsweise weist der Schliff 2a eine Höhe axial zur Stabachse des Filterelements im Bereich von 5 bis 20 mm, bevorzugter 5 bis 15 mm und besonders bevorzugt 6 bis 10 mm auf.

Weiterhin vorzugsweise weist der Schliff 2a eine Tiefe im Bereich von 0,1 bis 7 mm, bevorzugter 2 bis 6 mm und besonders bevorzugt 2.5 bis 5 mm auf. Mit anderen Worten ist der Radius des Filterelements 2 beim Schliff 2a um den vorstehend genannten Wert vermindert.

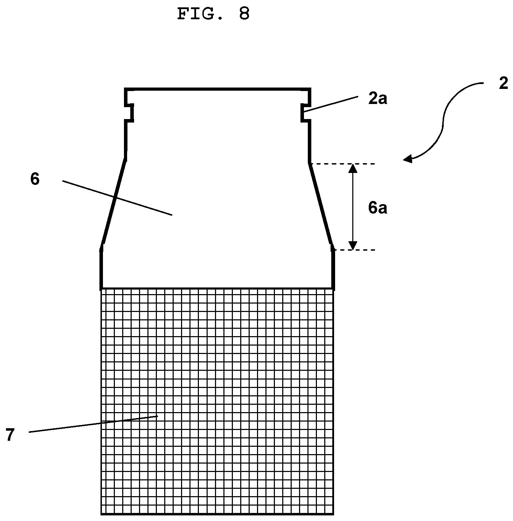

In Fig. 8 ist eine Ansicht einer Ausführungsform eines erfindungsgemäss bevorzugten Kunststoff-Filterelements 2 gezeigt. Das Filterelement 2 gemäss dieser Ausführungsform zeichnet sich durch einen Schliff 2a aus, welcher die Ausstülpungen 5a, 5b im Abschnitt des Dichtelements 5 zur dichtenden Anordnung aufnehmen kann. Dadurch kann das Dichtelement 5 rutschfest auf dem Filterelement 2 angeordnet werden.

Das Kunststoff-Filterelement gemäss Fig. 8 weist ein Endstück 6 auf. Das Endstück ist mit einem Membranröhrchen 7 oder einem Membranbündel aus mehreren Membranröhrchen verbunden, beispielsweise durch eine Schicht aus gehärtetem Epoxidharz. Vorzugsweise sind beide Enden des Membranröhrchens 7 oder Membranbündels mit je einem Endstück 6 wie vorstehend beschrieben verbunden, wobei diese Endstücke besonders bevorzugt die gleichen Dimensionen aufweisen.

Das Endstück 6 ist über einen Abschnitt 6a konisch geformt, so dass sein Durchmesser über seine Höhe variiert. In Fig. 8 weist das Endstück 6 an dem mit einem Membranröhrchen 7 oder Membranbündel verbundenen Ende einen grösseren Durchmesser auf als an dem in einer Lochplatte anzuordnenden, mit einem Schliff 2a versehenen Ende.

## Patentansprüche

1. Dichtelement (5) für ein Filterelement (2) in einem Gehäuse- körper (1) einer Filtrationsanlage, vorzugsweise in einer Cross-Flow-Filtrationsanlage, wobei
das Dichtelement (5) einstückig ringförmig ausgebildet ist und einen Abschnitt zur dichtenden Anordnung des Filterele- ments (2) im Gehäusekörper (1) sowie einen Abschnitt zur Anschlagdämpfung für das Filterelement (2) umfasst, wobei der Abschnitt des Dichtelements (5) zur dichtenden Anord- nung des Filterelements (2) im Gehäusekörper (1) mindestens einen, vorzugsweise zwei, integrale O-ringförmige Teile (5a, 5b) umfasst und in einer Hälfte des Dichtelements (5) angeordnet ist, und **dadurch gekennzeichnet, dass** der Abschnitt zur Anschlag-
dämpfung einer Endkante des Filterelements (2) einen Ab- schnitt (5c) umfasst, der in das Innere des ringförmigen Dichtelements (5) ragt und an einem anderen Ende des Dich- telements (5) angeordnet ist, welches von dem Ende mit dem Abschnitt des Dichtelements (5) zur dichtenden Anordnung des Filterelements (2) im Gehäusekörper (1) verschieden ist und von diesem durch einen, vorzugsweise zylindrischen, Ab- schnitt getrennt ist.

2. Dichtelement (5) nach Anspruch 1, **dadurch gekennzeichnet, dass** der Abschnitt zur Anschlagdämpfung für das Filterele- ment (2) auf seiner Aussenseite eine Abschrägung (5d) auf- weist und dadurch von einem stirnseitigen Ende in einen zy- lindrischen Abschnitt übergeht.

3. Dichtelement (5) nach Anspruch 1, **dadurch gekennzeichnet, dass** der Abschnitt zur Anschlagdämpfung für das Filterele- ment (2) auf seiner Aussenseite eine Ausstülpung (5d) auf- weist.

4. Dichtelement (5) nach Anspruch 2, **dadurch gekennzeichnet, dass** die Abschrägung (5d) einen Winkel relativ zur Höhe (h1) des Dichtelements (5) von 10° bis 45°, bevorzugter 15° bis 40°, aufweist.

5. Gehäusekörper für eine Filtrationsanlage (1), umfassend mindestens ein Filterelement (2) mit einem darauf angeordneten Dichtelement (5) gemäss einem der Ansprüche 1 bis 3.

6. Gehäusekörper (1) nach Anspruch 5, **dadurch gekennzeichnet, dass** das Filterelement (2) stabförmig ist.

7. Gehäusekörper (1) nach Anspruch 5 oder 6, **dadurch gekennzeichnet, dass** das Filterelement (2) ein Keramik-Filterelement oder ein Kunststoff-Filterelement ist.

8. Gehäusekörper (1) nach einem der Ansprüche 5 bis 7, **dadurch gekennzeichnet, dass** das Filterelement an mindestens einem Ende einen Schliff (2a) aufweist.

9. Gehäusekörper (1) nach einem der Ansprüche 5 bis 8, **dadurch gekennzeichnet, dass** das Filterelement ein Membranröhrchen (7) oder ein Membranbündel aus mehreren Membranröhrchen (7) und mindestens ein Endstück (6) umfasst, wobei vorzugsweise das keinen Schliff (2a) aufweisende Ende des Endstücks (6) mit dem Membranröhrchen (7) oder Membranbündel verbunden ist.

10. Gehäusekörper (1) nach Anspruch 9, **dadurch gekennzeichnet, dass** das Endstück (6) einen konischen Abschnitt (6a) umfasst.

11. Gehäusekörper nach einem der Ansprüche 5 bis 10, **dadurch gekennzeichnet, dass** ein Dichtelement (5) über mindestens einem Ende des Filterelements (2), vorzugsweise einem Ende mit einem Schliff (2a), angeordnet ist.

12. Gehäusekörper nach einem der Ansprüche 5 bis 11, **dadurch gekennzeichnet, dass** der Gehäusekörper (1) genau zwei Lochplatten (4) mit Öffnungen (3) zur Aufnahme eines mit einem Dichtelement (5) versehenen Filterelements (2) aufweist.

13. Gehäusekörper nach einem der Ansprüche 5 bis 12, **dadurch gekennzeichnet, dass** es sich um einen Gehäusekörper für eine Cross-Flow-Filtrationsanlage handelt.

14. Gehäusekörper nach einem der Ansprüche 5 bis 13, **dadurch gekennzeichnet, dass** der Gehäusekörper 1 bis 300, vorzugsweise 1 bis 200, bevorzugter 6 bis 130 Filterelemente (2) umfasst.

## Claims

1. Sealing element (5) for a filter element (2) in a housing body (1) of a filtration system, preferably in a cross-flow filtration system, wherein the sealing element (5) is formed integrally in an annular shape and comprises a section for sealingly arranging the filter element (2) in the housing body (1) as well as a section for impact damping for the filter element (2), wherein the section of the sealing element (5) for sealingly arranging the filter element (2) in the housing body (1) comprises at least one, preferably two, integral O-ring-shaped parts (5a, 5b) and is arranged in one half of the sealing element (5), and **characterized in that** the section for impact damping of an end edge of the filter element (2) comprises a section (5c) which projects into the interior of the annular sealing element (5) and is arranged at another end of the sealing element (5), which is different from the end with the section of the sealing element (5) for sealingly arranging the filter element (2) in the housing body (1) and is separated therefrom by a, preferably cylindrical, section.

2. Sealing element (5) according to claim 1, **characterized in that** the section for impact damping for the filter element (2) has a bevel (5d) on its outer side and thereby transitions from a front end into a cylindrical section.

3. Sealing element (5) according to claim 1, **characterized in that** the section for impact damping for the filter element (2) has a protrusion (5d) on its outer side.

4. Sealing element (5) according to claim 2, **characterized in that** the bevel (5d) has an angle relative to the height (h1) of the sealing element (5) of 10° to 45°, more preferably 15° to 40°.

5. Housing body for a filtration system (1), comprising at least one filter element (2) with a sealing element (5) arranged thereon according to one of claims 1 to 3.

6. Housing body (1) according to claim 5, **characterized in that** the filter element (2) is rod-shaped.

7. Housing body (1) according to claim 5 or 6, **characterized in that** the filter element (2) is a ceramic filter element or a plastic filter element.

8. Housing body (1) according to one of claims 5 to 7, **characterized in that** the filter element has a ground joint (2a) at at least one end.

9. Housing body (1) according to one of claims 5 to 8, **characterized in that** the filter element comprises a membrane tube (7) or a membrane bundle of several membrane tubes (7) and at least one end piece (6), wherein preferably the end of the end piece (6) not having a ground joint (2a) is connected to the membrane tube (7) or membrane bundle.

10. Housing body (1) according to claim 9, **characterized in that** the end piece (6) comprises a conical section (6a).

11. Housing body according to one of claims 5 to 10, **characterized in that** a sealing element (5) is arranged over at least one end of the filter element (2), preferably an end with a ground joint (2a).

12. Housing body according to one of claims 5 to 11, **characterized in that** the housing body (1) has exactly two perforated plates (4) with openings (3) for receiving a filter element (2) provided with a sealing element (5).

13. Housing body according to one of claims 5 to 12, **characterized in that** it is a housing body for a cross-flow filtration system.

14. Housing body according to one of claims 5 to 13, **characterized in that** the housing body comprises 1 to 300, preferably 1 to 200, more preferably 6 to 130 filter elements (2).

## Revendications

1. Élément d'étanchéité (5) pour un élément filtrant (2) dans un corps de boîtier (1) d'une installation de filtration, de préférence dans une installation de filtration tangentielle, l'élément d'étanchéité (5) étant formé d'une seule pièce de manière annulaire et comprenant une section pour l'agencement d'étanchéité de l'élément filtrant (2) dans le corps de boîtier (1) ainsi qu'une section pour l'amortissement de butée de l'élément filtrant (2), la section de l'élément d'étanchéité (5) pour l'agencement d'étanchéité de l'élément filtrant (2) dans le corps de boîtier (1) comprenant au moins une, de préférence deux, parties intégrales en forme de joint torique (5a, 5b) et étant agencée dans une moitié de l'élément d'étanchéité (5), et **caractérisé en ce que** la section pour l'amortissement de butée d'un bord d'extrémité de l'élément filtrant (2) comprend une section (5c) qui fait saillie à l'intérieur de l'élément d'étanchéité (5) annulaire et est agencée à une autre extrémité de l'élément d'étanchéité (5), laquelle est différente de l'extrémité avec la section de l'élément d'étanchéité (5) pour l'agencement d'étanchéité de l'élément filtrant (2) dans le corps de boîtier (1) et en est séparée par une section, de préférence cylindrique.

2. Élément d'étanchéité (5) selon la revendication 1, **caractérisé en ce que** la section pour l'amortissement de butée de l'élément filtrant (2) présente sur son côté extérieur un chanfrein (5d) et passe ainsi d'une extrémité frontale à une section cylindrique.

3. Élément d'étanchéité (5) selon la revendication 1, **caractérisé en ce que** la section pour l'amortissement de butée de l'élément filtrant (2) présente sur son côté extérieur une saillie (5d).

4. Élément d'étanchéité (5) selon la revendication 2, **caractérisé en ce que** le chanfrein (5d) présente un angle par rapport à la hauteur (h1) de l'élément d'étanchéité (5) de 10° à 45°, plus préférablement de 15° à 40°.

5. Corps de boîtier pour une installation de filtration (1), comprenant au moins un élément filtrant (2) avec un élément d'étanchéité (5) agencé dessus selon l'une des revendications 1 à 3.

6. Corps de boîtier (1) selon la revendication 5, **caractérisé en ce que** l'élément filtrant (2) est en forme de tige.

7. Corps de boîtier (1) selon la revendication 5 ou 6, **caractérisé en ce que** l'élément filtrant (2) est un élément filtrant en céramique ou un élément filtrant en plastique.

8. Corps de boîtier (1) selon l'une des revendications 5 à 7, **caractérisé en ce que** l'élément filtrant présente à au moins une extrémité un rodage (2a).

9. Corps de boîtier (1) selon l'une des revendications 5 à 8, **caractérisé en ce que** l'élément filtrant comprend un tube membranaire (7) ou un faisceau de membranes composé de plusieurs tubes membranaires (7) et au moins une pièce d'extrémité (6), l'extrémité de la pièce d'extrémité (6) ne présentant pas de rodage (2a) étant de préférence connectée au tube membranaire (7) ou au faisceau de membranes.

10. Corps de boîtier (1) selon la revendication 9, **caractérisé en ce que** la pièce d'extrémité (6) comprend une section conique (6a).

11. Corps de boîtier selon l'une des revendications 5 à 10, **caractérisé en ce qu'**un élément d'étanchéité (5) est agencé sur au moins une extrémité de l'élément filtrant (2), de préférence une extrémité avec un rodage (2a).

12. Corps de boîtier selon l'une des revendications 5 à 11, **caractérisé en ce que** le corps de boîtier (1) présente exactement deux plaques perforées (4) avec des ouvertures (3) pour recevoir un élément filtrant (2) pourvu d'un élément d'étanchéité (5).

13. Corps de boîtier selon l'une des revendications 5 à 12, **caractérisé en ce qu'**il s'agit d'un corps de boîtier pour une installation de filtration tangentielle.

14. Corps de boîtier selon l'une des revendications 5 à 13, **caractérisé en ce que** le corps de boîtier comprend 1 à 300, de préférence 1 à 200, plus préférablement 6 à 130 éléments filtrants (2).
